# EUROPÄISCHE PATENTSCHRIFT

(11) **EP 2 099 670 B1**
(45) Veröffentlichungstag und Bekanntmachung des Hinweises auf die Patenterteilung: **15.09.2010**
(21) Anmeldenummer: 07847595.1
(22) Anmeldetag: 30.11.2007
(51) Int. Cl.: B62D 5/00, B62D 7/14, B62D 7/15

(54) **SYSTEM UND VERFAHREN ZUM EINSTELLEN EINES RADEINSCHLAGSWINKELS EINES RADES EINES KRAFTFAHRZEUGS**
SYSTEM AND METHOD FOR ADJUSTMENT OF A STEER ANGLE OF A WHEEL OF A MOTOR VEHICLE
SYSTEME ET PROCEDE DE REGLAGE D'UN ANGLE DE BRAQUAGE D'UNE ROUE D'UN VEHICULE AUTOMOBILE

(30) Priorität: 04.12.2006 DE 102006057363; 04.12.2006 DE 102006057360; 30.11.2007 DE 102007058143
(43) Veröffentlichungstag der Anmeldung: 16.09.2009
(73) Patentinhaber: Continental Teves AG & Co. oHG, 60488 Frankfurt (DE)
(72) Erfinder: BÖHM, Jürgen, 65558 Oberneisen (DE); LINKENBACH, Steffen, 65760 Eschborn (DE); MUTH, Norman, 35066 Frankenberg (DE)
(86) Internationale Anmeldenummer: PCT/EP2007/063079
(87) Internationale Veröffentlichungsnummer: WO 2008/068200

(56) Entgegenhaltungen:
- EP-A- 1 394 016
- EP-A- 1 512 609
- WO-A-2006/117343
- DE-A1- 10 211 809

## Beschreibung

Die Erfindung betrifft das Gebiet der Hinterradlenkung und betrifft insbesondere ein System zum Einstellen eines Radeinschlagswinkels eines Rades eines Kraftfahrzeugs mit den Merkmalen des Oberbegriffs des Anspruchs 1 sowie ein Verfahren zum Einstellen eines Radeinschlagswinkels eines Rades eines Kraftfahrzeugs nach Anspruch 7.

Bekannte Lenkvorrichtungen für eine Hinterradlenkung weisen ähnlich wie konventionelle Vorderachslenkungssysteme eine Spurstange auf, die das rechte und linke Hinterrad miteinander verbindet. Das Einstellen eines Radeinschlagswinkels erfolgt dabei durch eine elektromechanisch oder elektrohydraulisch gesteuerte Verschiebung der Spurstange. Derartige Lenkvorrichtungen erfordern jedoch einen erheblichen konstruktiven Aufwand.

Aus der deutschen Offenlegungsschrift DE 40 20 547 A1 ist eine Vorrichtung zum Verstellen des Radeinschlagswinkels der Hinterräder bekannt, bei der eine Spurstange und ein Radführungslenker über ein Kipphebelelement an einem Radträger gehalten sind. Die Spurstange ist über einen Hebel mit einer Kolbenstange eines hydraulischen Stellgliedes verbunden, das ein Verschwenken des Rades steuert. Diese Vorrichtung erfordert jedoch eine spezielle Radaufhängung, wodurch ebenfalls ein beträchtlicher konstruktiver Aufwand entsteht.

Um eine Lenkvorrichtung zum Einstellen eines Radeinschlagswinkels eines Rades eines Kraftfahrzeugs, insbesondere eines Hinterrades, in eine konventionelle Radaufhängung zu integrieren, wird in der WO 2006/117343 A1 eine Lenkvorrichtung offenbart, die wenigstens ein Radführungsglied umfasst, über das ein Radträger des Rades mit einem Fahrzeugaufbau verbunden ist, wobei der Radträger um eine im Wesentlichen parallel zur Radebene verlaufende Drehachse schwenkbar ist und das Radführungsglied beabstandet von der Drehachse an dem Radträger angelenkt ist. Das Radführungsglied ist dabei mittels einer Antriebseinheit in seiner Länge verstellbar.

Weiterhin offenbart die EP1 394 016 A1 ein Verfahren zum Einstellen eines Radeinschlagswinkels eines Rades eines Kraftfahrzeugs mit den Merkmalen des Oberbegriffs des unabhängigen Anspruchs 7.

Die Aufgabe der Erfindung ist es, das Einstellen eines Radeinschlagswinkels eines Rades eines Kraftfahrzeugs zuverlässiger auszuführen und bei einem Fehler in der Lenkung einen sicheren Zustand einzunehmen.

Die Aufgabe wird gelöst durch die Merkmale des Anspruchs 1 und durch die Merkmale des Anspruchs 7. Weitere vorteilhafte Ausgestaltungen sind in den abhängigen Ansprüchen angegeben.

Das System zum Einstellen eines Radeinschlagswinkels eines Rades eines Kraftfahrzeugs, insbesondere eines Hinterrades, umfasst wenigstens ein Radführungsglied, über das ein Radträger des Rades mit einem Fahrzeugaufbau verbunden ist, wobei der Radträger um eine im Wesentlichen parallel zur Radebene verlaufende Drehachse schwenkbar ist und das Radführungsglied beabstandet von der Drehachse an dem Radträger angelenkt ist, wobei das Radführungsglied mittels einer Aktuators in seiner Länge verstellbar ist. Es wird mindestens ein Aktuator durch einen Motor 30 und mindestens einer Steuereinheit 10, 80, 81 direkt und/oder indirekt angesteuert. Die Steuereinheit umfasst eine Rechnereinheit mit Speicher sowie mindestens eine drahtgebundene Kommunikationsschnittstelle. Die mindestens eine Steuereinheit sendet und empfängt mittels der Kommunikationsschnittstelle und mindestens eines Kommunikationsbusses Daten.

Die Ansteuerung der Spurstangen erfolgt durch Hinterradlenkungssteuergeräte (RWS-Steuergeräte) 80, 81 mit dem die Spurstangen 70, 71 jeweils prinzipiell über eine elektronische Schnittstelle verbunden sind. Im Weiteren wird der Begriff RWS-Steuergerät (RWS = Rear Wheel Steering) für die Hinterradsteuergeräte 80, 81 verwendet.

Es ist vorgesehen, dass das System als eine erste Steuereinheit ein ESP-Steuergerät 10 und als ein zweites und drittes Steuergerät zwei RWS-Steuergeräte 80, 81 aufweist, wobei die RWS-Steuergeräte 80, 81 modular aufgebaut sind und Mittel zur Erfassung von lokalen Sensorgrößen 30, 32, 40, 42, 50, 52, 60, 62 der Aktuatoren aufweisen.

Nach der Erfindung werden die zwei RWS Steuergeräte 80, 81 durch eine Kreuzschaltung durch Schalter 140, 150, 141, 151 direkt miteinander verbunden und die RWS Steuergeräte 80, 81 bei einem Fehlerfall innerhalb einer RWS Funktionalität eine gegenseitige Abschaltung durchführen und die RWS Steuergeräte 80, 81 die Aktuatoren in der Art ansteuern, dass eine abgestufte Systemstilllegung durchgeführt wird. Des Weiteren ist es erfindungsgemäß angedacht, dass die abgestufte Systemstillegung mindestens zweistufig ist.

In einer weiteren vorteilhaften Ausgestaltung erfasst eine RWS Steuereinheit (80, 81) den Motorwinkel ϕ_{Mot}, den Spurstangenweg X, ein Motormoment M_{Mot}, einen Motorstrom I_{Mot} des Motors (30, 32), eine Fahrzeuggeschwindigkeit V_{Vehicle}, Fahrerlenkwinkel der Vorderachse δ_{driver}.(15 b) und dem jeweiligen Rad zugeordneten Korrekturlenkwinkel Δδ_{ESP}(15c).

Eine weiter vorteilhafte Ausgestaltung des Systems zeichnet sich dadurch aus, dass das ESP Steuergerät 10, die RWS Steuergeräte 80, 81 überwacht und bei Vorliegen eines Fehlerfalls innerhalb einer RWS Funktionalität durch die Schalter 140, 150, 141, 151 die RWS Steuergeräte 80, 81 abschaltet.

Der Erfindung nach ist ein Verfahren zum Einstellen eines Radeinschlagswinkels eines Rades eines Kraftfahrzeugs vorgesehen. Das Verfahren erkennt bei Auftreten eines Fehlerfalls in einer Lenkungsaktuatorik 90, 91 diesen Fehlerfall durch die RWS Steuergeräte 80, 81 wobei die RWS Steuergeräte (80, 81) bei Erkennung eines Fehlerfalls in einer Lenkungsaktuatorik (90, 91) eine abgestufte Systemstilllegung durchführen, wobei die abgestufte Systemstilllegung mindestens zweistufig ist und die RWS Steuergeräte 80, 81 eine gegenseitige Abschaltung und die Abschaltung der Lenkungsaktuatorik durchführen.

Eine vorteilhafte Ausgestaltung des erfindungsgemäßen Verfahren zeichnet sich dadurch aus, dass das ESP Steuergerät 10 bei Erkennung eines Fehlerfalls eine abgestufte Systemstilllegung durchführt, wobei die abgestufte Systemstilllegung mindestens zweistufig ist und das ESP Steuergerät 10 die RWS Steuergeräte 80, 81 und die Abschaltung der Lenkungsaktuatorik 90, 91 durchführt.

In einer weiteren vorteilhaften Ausgestaltung des erfindungsgemäßen Verfahrens erfolgt die Erkennung eines Fehlerfalls durch eine gegenseitige Überwachung der RWS Steuergeräte 80,81 oder durch eine Überwachung durch das ESP Steuergerät, wobei die Überwachung durch eine Überprüfung der über einen Datenbus 110 übertragen Daten erfolgt und ein Funktions-Code auf dem überwachenden Steuergerät abgearbeitet wird und mit dem Funktions-Code von dem zu überwachenden Steuergerät verglichen wird.

### Beschreibung und Vorteile der Erfindung

Die Funktion der Hinterradlenkung wurde bereits in der von der Anmelderin eingereichten WO 2006/117343 A1 beschrieben. Die radindividuelle Lenkbewegung der beiden Hinterräder wird dabei durch eine, mittels 2 Elektromotoren elektromechanisch verstellbare Spurstange des Hinterradsintegralträgers erreicht.

Ein Ausführungsbeispiel der Erfindung ist in den Zeichnungen dargestellt und wird im Folgenden näher beschrieben.

Es zeigt
Fig. 1 Systemarchitektur für die Ansteuerung der Hinterradlenkung mit gegenseitiger Überwachung durch die RWS Steuergeräte
Fig. 2 Systemarchitektur für die Ansteuerung der Hinterradlenkung mit Signalschnittstelle für Spurstangenweg
Fig. 3 Systemarchitektur für die Ansteuerung der Hinterradlenkung mit Signalschnittstelle für Radlenkwinkel

### Beschreibung von Ausführungsbeispielen

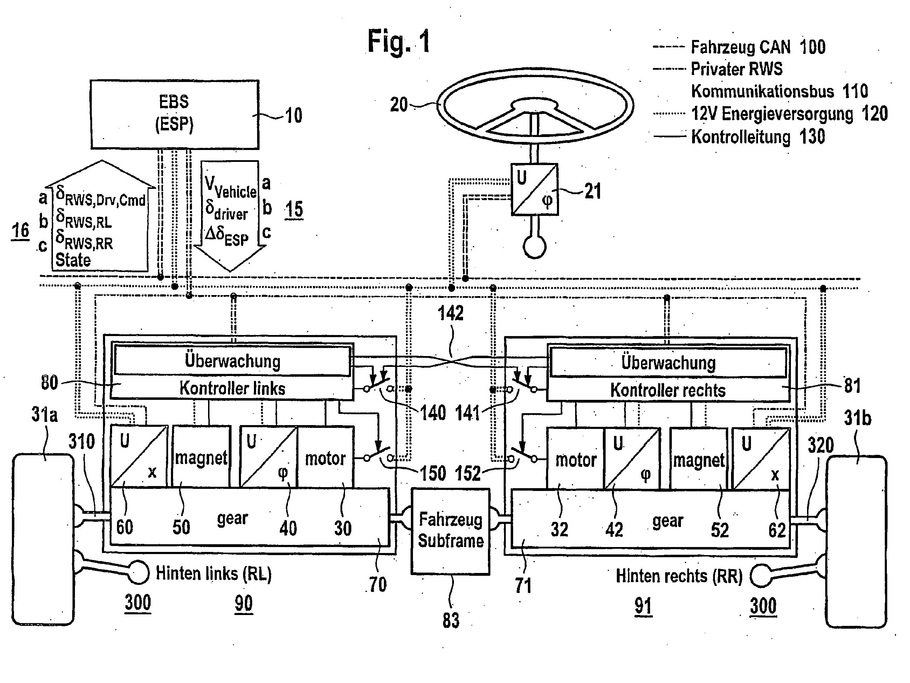

Figur 1 zeigt in schematischer Darstellung, betrachtet aus Blickrichtung des Heckes eines vierrädrigen Kraftfahrzeugs mit einem linken Hinterrad 31a und einem rechten Hinterrad 31b. Die Hinterräder 31a, 31b sind durch einen nicht eingezeichneten Hinterradträger 300 an dem Fahrzeug befestigt, bei dem es sich beispielsweise um den in Figur 1 der DE 102005020396 offenbarten Hinterradintegralträger handeln kann. Jedem Hinterrad 31a, 31b ist eine Spurstange 70 und 71 zugeordnet, bei der es sich jeweils um eine in ihrer Länge verstellbare Spurstange 310/320 handelt. Die Spurstangen 310, 320 greifen über in der Figur schematisch dargestellt an die Hinterräder 31a, 31b an, so dass diese sich aufgrund von Längenänderungen der Spurstangen 70, 71 bezüglich einer Schwenkachse um einen Winkel verschwenken lassen.

Grundsätzlich können die Hinterräder 31a, 31b dabei gleichsinnig oder gegensinnig in Bezug auf die Lenkbewegung der Vorderräder eingelenkt werden. Durch ein gegensinniges Einlenken der Hinterräder 31a, 31b und der Vorderräder verringert sich bei gleichbleibendem Lenkwinkel an den Vorderrädern der Kurvenradius, so dass eine Erhöhung der Agilität des Fahrzeugs erreicht werden kann. Werden die Hinterräder 31a, 31b in gleichsinnigem Drehsinn zu den Vorderrädern eingelenkt, verringert sich die Gierrate des Fahrzeugs, so dass das Fahrzeug in kritischen Fahrsituationen stabilisiert werden kann.

Die Ansteuerung der Spurstangen erfolgt durch Hinterradlenkungssteuergeräte (RWS-Steuergeräte) 80, 81 mit dem die Spurstangen 70, 71 jeweils über eine elektronische Schnittstelle verbunden sind. Über die Schnittstelle können insbesondere Steuerbefehle zur Ansteuerung der Motoren 30, 32 der Spurstangen 70, 71 einerseits sowie andererseits Signale von Wegsensoren 60, 62, welche die Position der Schubstange innerhalb des Gehäuses der Spurstange erfassen, übermittelt werden. Innerhalb der RWS Steuergeräte 80, 81 wird aus diesen Signalen der jeweils aktuelle Radeinschlagswinkel der Hinterräder 31a, 31b ermittelt. Die beiden Spurstangen 70, 71 stellen dabei eigenständige Module dar, die unabhängig voneinander angesteuert werden können, so dass an jedem Hinterrad 31a, 31b grundsätzlich ein innerhalb der mechanischen Anschläge frei wählbarer Radeinschlagswinkel einstellbar ist.

Die Ansteuerung erfolgt anhand eines Regelungsverfahrens in Abhängigkeit von verschiedenen Fahrzeuggrößen, die insbesondere mit Hilfe von Sensoren 30,32,40,42,50,52,60,62 gemessen werden. Vorzugsweise werden zur Durchführung des Regelungsverfahrens Sensoren eines Fahrdynamikregelsystems, beispielsweise eines ESP Systems (ESP: Electronic Stability Program) 10, verwendet. Diese umfasst üblicherweise einen Lenkwinkelsensor 21 zum Erfassen des Lenkwinkels, den der Fahrer mittels einer Lenkhandhabe 20 an den lenkbaren nicht eingezeichneten Vorderrädern eingestellt hat. Des Weiteren kann das Fahrdynamikregelsystem die Soll- und Istwerte für die Radeinschlagswinkel der Hinterräder sowie Zustandsinformationen der RWS Steuergeräte empfangen und auswerten.

Diese Signale werden in einem ESP Steuergerät 10 empfangen und ausgewertet. Das ESP Steuergerät ist üblicherweise mit einer elektrohydraulischen Einheit zur Durchführung von Bremseneingriffen in einer Baugruppe integriert. Über die elektrohydraulische Einheit ist dabei der Hauptbremszylinder der hydraulischen Fahrzeugbremsanlage mit den Radbremsen verbunden. Mithilfe elektronisch steuerbarer Ventile lässt sich dabei der von dem Fahrer über den Bremskraftverstärker mittels einer Bremsenbetätigungseinrichtung aufgebaute Bremsdruck radindividuell modifizieren. Ferner verfügt die Hydraulikeinheit über eine Druckaufbaueinrichtung, mit der fahrerunabhängig Bremseneingriffe zur Stabilisierung des Fahrzeugs vorgenommen werden können, die von dem ESP Steuergerät aufgrund eines dem Fachmann an sich bekannten Regelungsverfahrens gesteuert werden.

Bei der in Figur 1 dargestellten Ausführungsform der Erfindung ist eine Schnittstelle zur Signalübertragung zwischen dem ESP-Steuergerät und den RWS Steuergeräten 80, 81 vorgesehen. Die Signalübertragung kann dabei beispielsweise über einen Datenbussystem wie das üblicherweise in Kraftfahrzeugen eingesetzte CAN (Controller Area Network) erfolgen.

Die Schnittstelle wird zur Übertragung der Signale der ESP-Sensorik an die RWS Steuergeräte 80, 81 genutzt werden, welche in Abhängigkeit von den Sensorsignalen anhand eines Regelverfahrens Sollwertvorgaben für die Radeinschlagswinkel der Hinterräder 31a, 31b bzw. die Längen der Spurstangen 70, 71 generiert.

Die Ansteuerung der beiden Spurstangen 70, 71 mit jeweils einem Elektromotor 30, 32 erfolgt mittels eines dem jeweiligen Motor zugeordneten RWS Steuergerät 80, 81.

Beide RWS Steuergeräte 80, 82 sind mit einem privaten Datenbus 110 miteinander verbunden. Weiterhin ist das ESP Steuergerät über diesen Datenbus mit den beiden Steuergeräten verbunden. Der Datenbus kann beispielsweise mittels CAN oder Flex-Ray realisiert werden.

Beide RWS Steuergeräte 80, 81 realisieren gemeinsam die Lenkungsgrundfunktion für die Hinterradlenkung mit variabler Lenkübersetzung und Regelung bzw. Einstellung des Radeinschlagwinkels der Hinterräder. Die zur Darstellung der variablen Lenkübersetzung notwendigen Eingangsinformationen bezüglich der Fahrzeuggeschwindigkeit und des vom Fahrer eingestellten Lenkwinkels an der Vorderachse, somit dem Fahrerlenkwinkel werden vom ESP-Steuergerät 10 über den privaten Datenbus 110 zur Verfügung gestellt. Zusätzlich werden Lenkwinkelkorrektureingriffe aufgrund der Fahrdynamikregelung vom ESP Steuergerät 10 über den privaten Datenbus 110 an die RWS Steuergeräte 80, 81 übertragen und müssen von diesen berücksichtigt werden.

Beide RWS Steuergeräte 80, 81 stellen Einfachrechner dar, welche sich gegenseitig auf Plausibilität und ordnungsgemäße Funktionsabarbeitung überwachen. Als Plausibilitätsprüfung ist es erfindungsgemäß angedacht eine Überprüfung durchzuführen, ob ein konkreter Wert zu einem bestimmten Datentyp gehört oder in einem vorgegebenen Wertebereich oder einer vorgegebenen Wertemenge liegt. Hierdurch wird gewährleistet, dass das erfindungsgemäße Verfahren den vorab aufgestellten dynamischen Anforderungen genügt. Die dynamischen Anoderungen werden entweder vorab angegeben oder sie werden mittels eines Lernverfahrens eingelernt und entsprechend aktualisiert.

Bei Auftreten und Feststellen eines Fehlers, der ein Abschalten der RWS 90, 91 zur Folge haben muss und durch das Einnehmen des sicheren Zustandes, wobei die Elektromechanik verriegelt wird, hat jedes RWS Steuergerät 80, 81 die Möglichkeit, sich selbst über den Schalter 140 bzw. 141 durch Einnehmen der der entsprechenden Schalterstellung, sowie zusätzlich das zweite RWS Steuergerät über den Schalter 141 ebenfalls von der Energieversorgung 120 zu trennen. Dadurch wechseln das RWS System und jeder der beiden einzelnen Aktuatoren in den verriegelten und damit sicheren Zustand, wobei die Aktuatoren über den Schalter 150 bzw. 152 von der Energieversorgung getrennt werden. Prinzipiell werden damit die RWS Steuergeräte 80, 81 in dieser Ausführungsform über Kreuz geschaltet 142 und benötigen keine übergeordnete Kontrollinstanz, um in den Sicheren Zustand zu gelangen.

Jedes RWS Steuergerät 80, 81 erfasst in der ersten Ausführungsform nach Fig. 1 die lokalen Sensorgrößen Motorwinkel ϕ_{Mot} 40,42 und Spurstangenweg X 60, 62 sowie den Motorstrom I_{Mot} des Motors 30, 32 aus dem das Motormoment M_{Mot} ermittelt werden kann.

Des Weiteren werden durch die RWS Steuergeräte 80, 81 die für die variable Lenkübersetzungsfunktion erforderlichen Signale Fahrzeuggeschwindigkeit V_{Vehicle} 15a und Fahrerlenkwinkel der Vorderachse δ_{driver} 15b erfasst und zusätzlich zu dem, dem Rad zugeordneten Korrekturlenkwinkel Δδ_{ESP} 15c, das als Ergebnis der Fahrdynamikregelung vom ESP-Steuergerät übermittelt wird, ausgewertet.

Jedes RWS Steuergerät 80, 81 berechnet die variable Lenkübersetzung (VSR). Es erfolgt hierbei eine Berechnung eines Lenkwinkels δ_{RWS,Drv,Cmd} 16a für die Hinterräder auf der Basis von Fahrzeuggeschwindigkeit, Fahrerlenkwinkel sowie einer für das Fahrzeug abgestimmten Lenkübersetzungsfunktion. Diese Funktion kann in einer bevorzugten Ausführungsform in Form einer Kennlinie bzw. eines Kennlinienfeldes dargestellt sein. Da beide RWS Steuergeräte 80, 81 gleiche Eingangsinformationen erhalten sowie die gleiche Lenkübersetzungsfunktion betrachten, ist im fehlerfreien Zustand der betrachtete Lenkwinkelsollwert in beiden Steuergeräten gleich.

Die RWS Steuergeräte 80, 81 berücksichtigen die Lenkwinkelkorrektureingriffe Δδ_{ESP} 15c aufgrund der Fahrdynamikregelung. Als Ergebnis ergibt sich ein Gesamt-Sollwert für den Lenkwinkelregler δ_{RWS,Cmd} = δ_{RWS,Drv,Cmd}.+Δδ_{ESP} des betrachteten Lenkungsaktuators. Hierbei ist es grundsätzlich möglich, dass der erwähnte Korrekturlenkwinkel für den rechten und linken Aktuator verschieden oder gleich sein kann (δ_{RWS,Cmd,RR} = δ_{RWS,Drv,Cmd}.+Δδ_{ESP,RR} bzw. δ_{RWS,Cmd,RL} = δ_{RWS,Drv,Cmd}.+Δδ_{ESP,RL}). Die Abkürzung RR und RL stehen für RR: Rear Right, Rechter Aktuator, RL: Rear Left, Linker Aktuator.

Die RWS Steuergeräte 80, 81 führen die Lenkwinkelregelung der dem RWS Steuergerät zugeordneten Elektromechanik 70, 71 auf der Basis der ermittelten Sollwerte δ_{RWS,Cmd} sowie der erfassten und den Lenkwinkelistwert repräsentierenden Signalen Motorwinkel δ_{Mot} 40,42 und/oder Spurstangenweg X 60, 62 durch und übernehmen die Ansteuerung des Motors mit der ermittelten Stellgröße (z.B. Motor-Sollmoment) der Lenkwinkelregelung und die Überwachung der Eingangssignale und des Aktuatorverhaltens auf Plausibilität und ordnungsgemäße Funktion.

Jedes RWS Steuergerät 80, 81 überwacht zusätzlich die ordnungsgemäße Funktion des gegenüberliegenden RWS Steuergerätes. Hierzu erhält das überwachende RWS-Steuergerät über den privaten Datenbus 110 zusätzlich die Weginformation X 60a, bzw. 62a des zu überwachenden Aktuators direkt vom Sensor 60, 62, sowie - abhängig von der festgelegten Überwachungsmethode- weitere lokale Sensorinformationen, Systemzustände und die ermittelte Stellgröße des zu überwachenden Steuergerätes von diesem Steuergerät. Aufgrund dieser Eingangsdaten wird nun überprüft, ob die vom zu überwachenden Steuergerät ermittelten Stellgrößen sowie Systemzustände und ggf. weitere wichtige Zwischenergebnisse plausibel bzw. bestätigt werden können.

Hierzu müssen diese Daten zusätzlich über den bereits erwähnten privaten Datenbus 110 übermittelt werden. Diese Überprüfung kann z.B. erfolgen, indem zur Überwachung der gleiche Funktions-Code auf diesem Steuergerät nochmals abgearbeitet und mit den vom zu überwachenden Steuergerät übermittelten Daten verglichen wird. Treten Abweichungen auf, bzw. sind die festgestellten Abweichungen außerhalb eines Toleranzbandes, so wird der Fehler erkannt, was zur Systemstilllegung führt. Anstelle des gleichen Funktions-Codes besteht auch die Möglichkeit, einen reduzierten Funktions-Code und Plausibilitätsprüfungen zu verwenden, allerdings führt dies zu einem vergrößerten Toleranzbereiches.

Die Systemstilllegung erfolgt in Abstufungen. Zur vereinfachten Erklärung wird angenommen, dass das dem linken Lenkungsaktuator RWS_RL 90 zugeordnete RWS-Steuergerät 80 das Vorliegen eines Fehlers erkannt hat. Der rechte Lenkungsaktuator 91 wird im weiteren mit RWS_RR gekennzeichnet.

In der ersten Abstufung der Systemstilllegung (Geordnete Systemabschaltung I) hat der Lenkungsaktuator RWS RL 90 in den ihm zugeordneten Komponenten einen Fehler erkannt, der keinen direkten Einfluss auf die Regelbarkeit und Ansteuerung des RWS_RL-Motors 30 hat, wie z.B. unplausible oder fehlerhafte Eingangsdaten für die variable Lenkübersetzungsfunktion. In diesem Fall fährt der RWS_RL Aktuator auf die vordefinierte Passivposition, die beispielsweise durch die Geradeaus-Stellung der Hinterräder definiert ist und wird dort geordnet verriegelt. Gleichzeit wird über den privaten Datenbus 110 der Aktuator RWS_RR 91 durch einen entsprechenden Steuerbefehl dazu veranlasst, ebenfalls diese Position anzufahren und den Aktuator nach Erreichen dieser Position ebenfalls geordnet zu verriegeln. Das geordnete Verriegeln beinhaltet hierbei, dass nach dem Erreichen der Zielposition der Aktuator zunächst verriegelt wird und erst dann das Motormoment langsam bis auf den Wert 0 Nm abgebaut wird.

In der zweiten Abstufung der Systemstilllegung (Sofortige Abschaltung des betroffenen Aktuators) hat RWS_RL 90 in den ihm zugeordneten Komponenten einen Fehler erkannt, der eine sichere Regelbarkeit und Ansteuerung des RWS_RL-Motors 30 nicht mehr gewährleisten kann. In diesem Fall wird der Aktuator sofort abgeschaltet und der Motor 30 und Verriegelung stromlos geschaltet. Gleichzeitig wird über den privaten Datenbus 110 der Aktuator RWS_RR 91 durch einen entsprechenden Steuerbefehl dazu veranlasst, die für diesen Fall definierte Aktuatorpassivposition anzufahren und den Aktuator nach Erreichen dieser Position geordnet zu verriegeln. Die Aktuatorpassivposition kann in diesem Fall ebenfalls durch die Geradeaus-Stellung der Hinterräder definiert sein oder ist so festgelegt, dass sie von der Position des fehlerhaften Aktuators RWS_RL 90 abhängig ist.

In der dritten Abstufung der Systemstilllegung (Abschaltung des überwachten Steuergerätes) hat RWS_RL 90 bei der Überwachung des RWS_RR Steuergerätes 81 ein nicht plausibles Systemverhalten festgestellt. Dies führt zu einer Abschaltung des RWS_RR Steuergerätes 81 durch Trennen von der Energieversorgung durch das RWS_RL Steuergerät 80. Gleichzeitig fährt der Aktuator RWS_RL 90 die für diesen Fall definierte Aktuatorpassivposition an und verriegelt ihn nach Erreichen dieser Position wie oben beschrieben. Für den Fall, dass diese vordefinierte Passiv-Position von der Position des Aktuators RWS_RR 91 abhängig ist, steht diese Information trotz abgeschaltetem Steuergerät zur Verfügung, da sie auf dem privaten Datenbus 110 verfügbar ist.

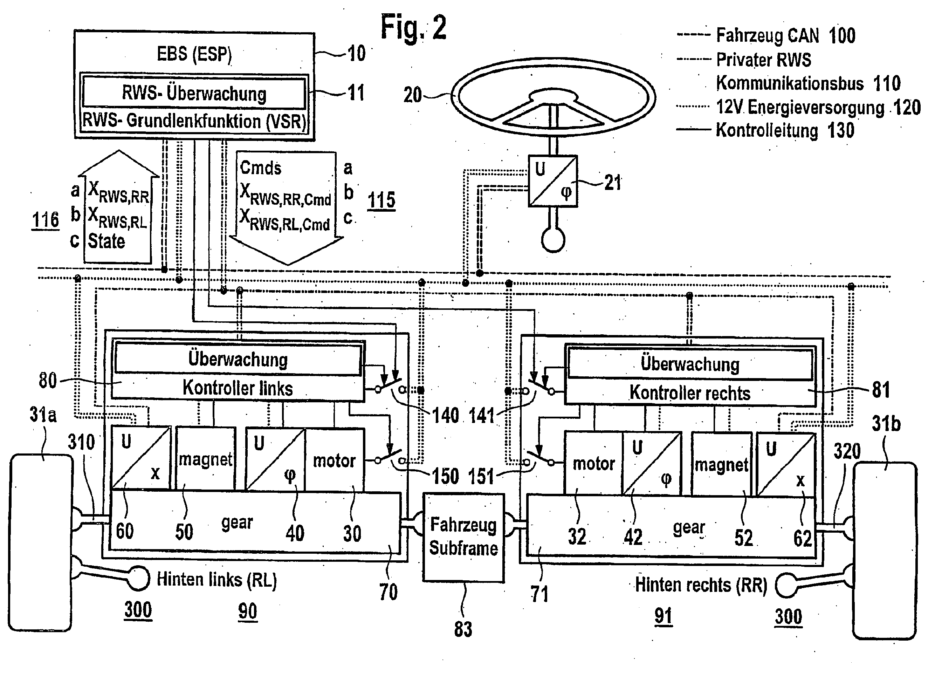

Figur 2 zeigt eine zweite Ausführungsform des erfindungsgemäßen Systems für die Ansteuerung der Hinterradlenkung. Bei dieser Ausführung des erfindungsgemäßen Systems handelt es sich um eine dezentrale Systemarchitektur, bei der Teile der Grundfunktionalität der RWS Steuergeräte 80, 81 sowie die Gesamtsystemüberwachung im für die Fahrdynamikregelung zuständigen ESP-Steuergerät 10 angeordnet sind. Gleichfalls ist es vorgesehen sein, dass diese Sollwertvorgaben in dem ESP-Steuergerät bestimmt und über die Schnittstelle an die RWS Steuergerät 80, 81 übertragen werden, welches die Spurstangen 70, 71 dann entsprechend der Sollwertvorgaben ansteuert.

Die radindividuelle Lenkbewegung der beiden Hinterräder 31a, 31b wird dabei durch eine, wie bereist erwähnt, mittels zweier Elektromotoren 30, 32 elektromechanisch verstellbare Spurstange 70, 71 des Hinterradintegralträgers erreicht.

Die Ansteuerung der beiden Spurstangen 70, 71 mit jeweils einem Elektromotor 30, bzw. 32 erfolgt mittels eines dem jeweiligen Motor zugeordneten RWS Steuergerät 80, 81. Beide RWS Steuergeräte 80, 81 sind mit einem privaten Datenbus 110 miteinander verbunden. Weiterhin ist das ESP Steuergerät 10 über diesen privaten Datenbus 110 mit den beiden RWS Steuergeräten 80, 81 verbunden. Der private Datenbus 110, kann beispielsweise mittels CAN realisiert werden. Alternativ können noch weiter Protokolle eingesetzt werden, die den Anforderungen hinsichtlich der Übertragung der Carrier Sense Multiple Access/Collision Resolution (CSMA/CR) genügen.

Die Aufteilung der Funktionalität bei dieser Ausführungsform der dezentralen RWS Systemarchitektur erfolgt in der Art, dass im ESP Steuergerät, zusätzlich zur ESP Funktion, die variable Lenkübersetzungsfunktion für die Hinterradlenkung sowie die Überwachung der RWS Gesamtsystemfunktion realisiert ist.

Wie aus Figur 2 erkennbar, kann bei Auftreten und Festellen eines Fehlers, der ein Abschalten der RWS 90, 91 zur Folge haben muss, wodurch das Einnehmen des sicheren Zustandes mit verriegelter Elektromechanik ist bedingt wird, das ESP Steuergerät 10 das betroffene RWS Steuergerät 80, 81 oder beide von der Energieversorgung 120 trennen, was auch als Powerabschaltung bezeichnet wird. Dadurch wechselt das RWS System 90, bzw. 91 und somit jeder der beiden einzelnen Aktuatoren, in den verriegelten und damit sicheren Zustand.

Das dem jeweiligen Lenkungsaktuator zugeordnete RWS Steuergerät 80, 81 realisiert die Lenkwinkelregelung für den betrachteten Aktuator und somit die Regelung bzw. Einstellung des Radeinschlagwinkels der Hinterräder, sowie eine lokale, auf den Aktuator beschränkte Funktionsüberwachung. Diese lokale Überwachung besteht in der Überwachung des ihm zugeordneten Teilsystems auf Plausibilität, z.B. der Eingangsdaten und ggf. Zwischenwerte und der ordnungsgemäßen Funktionsabarbeitung. Bei Auftreten eines Fehlers, der ein Abschalten des RWS Aktuators zur Folge haben muss, hat jedes RWS Steuergerät 80, 81 die Möglichkeit, sich selbst über die Schalter 140, 141 abzuschalten.

Beide RWS Steuergeräte 80, 81 stellen Einfachrechner dar, welche sich selbst auf Plausibilität und ordnungsgemäße Funktionsabarbeitung überwachen. Zusätzlich erfolgt eine Funktionsüberwachung durch das ESP Steuergerät 10.

Die Sensoren für den Spurstangenweg sind ebenfalls direkt an den privaten Datenbus 110 angekoppelt, sodass auch im Fehlerfall, wie z.B. beide RWS Steuergeräte stromlos, das ESP Steuergerät über die aktuelle Spurstangenweginformation 116 a,b,c verfügt, was für die ESP Funktion des ESP Steuergerät 10 von Wichtigkeit ist, da diese Signale den Radeinschlagwinkel der Hinterräder repräsentieren.

Durch das ESP Steuergerät 10 wird die Funktion der variablen Lenkübersetzung (VSR) für die Hinterräder realisiert. Es erfolgt die Berechnung eines Lenkwinkels δ_{RWS},_{Drv},_{Cmd} für die Hinterräder auf der Basis der im ESP Steuergerät bereits verfügbaren Signale Fahrzeuggeschwindigkeit, Fahrerlenkwinkel sowie einer für das Fahrzeug abgestimmten Lenkübersetzungsfunktion. Dies kann in einer bevorzugten Ausführungsform durch eine Kennlinie bzw. ein Kennlinienfeld dargestellt erfolgen, wobei diese durch eine Tabelle mit entsprechenden Werten im Speicher des ESP Steuergerätes abgelegt wird.

Des Weiteren berücksichtigt das ESP Steuergerät 10 den Lenkwinkelkorrektureingriffe Δδ_{ESP} 15b aufgrund der im ESP Steuergerät 10 implementierten Fahrdynamikregelung. Als Ergebnis ergibt sich ein Gesamt-Sollwert für den Lenkwinkelregler δ_{RWS,Cmd} = δ_{RWS,Drv},_{Cmd}.+Δδ_{ESP}. Hierbei ist es grundsätzlich möglich, dass der erwähnte Korrekturlenkwinkel für den rechten und linken Aktuator verschieden oder gleich sein kann(δ_{RWS,Cmd,RR} = δ_{RWS,Drv,Cmd}.+ Δδ_{ESP,RR} bzw. δ_{RWS,Cmd,RL} = δ_{RWS,Drv,Cmd}.+ Δδ_{ESP,RL}).

Das ESP Steuergerät berechnet und übermittelt die korrespondierenden Sollwerte für den Spurstangenweg 60 und 62 (X_{RWS,Cmd,RR} und X_{RWS,Cmd,RL}) des rechten und linken Hinterradaktuators unter Berücksichtigung der fahrzeugspezifischen Achskinematik, die in diesem Fall durch den Zusammenhang zwischen Spurstangenweg und Radlenkwinkel der Hinterräder definiert ist, und es überwacht die ordnungsgemäßen Funktion der beiden RWS Steuergeräte 80, 81

Zusätzlich erhält das ESP Steuergerät über den privaten Datenbus 110 die Weginformationen X der zu überwachenden Aktuatoren direkt vom Sensor 60, 62, sowie - abhängig von der festgelegten Überwachungsstrategie- weitere lokale Sensorinformationen der zu überwachenden RWS Steuergeräte 80, 81 von diesen. Aufgrund dieser Eingangsdaten wird überprüft, ob die von den RWS Steuergeräten 80, 81 ermittelten Stellgrößen sowie Systemzustände und ggf. weitere wichtige Zwischenergebnisse plausibel sind bzw. bestätigt werden können. Hierzu werden diese Daten zusätzlich über den bereits erwähnten privaten Datenbus 110 übermittelt. Diese Überprüfung kann z.B. erfolgen, indem zur Überwachung der gleiche Funktions-Code auf dem ESP Steuergerät 10 nochmals abgearbeitet und mit den übermittelten Daten verglichen wird. Treten Abweichungen auf, bzw. sind die festgestellten Abweichungen außerhalb eines Toleranzbandes, so wird der Fehler erkannt, was zur Systemstilllegung führt. Anstelle des gleichen Funktions-Codes besteht auch die Möglichkeit, einen reduzierten Funktions-Code und/oder zusätzliche Plausibilitätsprüfungen zu verwenden, und führt zu einem vergrößerten Toleranzbereich.

Bei der in Figur 2 dargestellten Signalschnittstelle zwischen dem ESP Steuergerät 10 und den beiden RWS Steuergeräten 80, 81 handelt es sich um eine Wegschnittstelle. Die Sollwerte für die Aktuatorregelung repräsentieren somit Sollwerte für den einzustellenden Spurstangenweg. Über die Lenkkinematik der Hinterradachse ergibt sich dann der entsprechende Radeinschlagwinkel. Diese Wegschnittstelle hat den Vorteil, dass die auf den RWS-Steuergeräten 80, 81 eingesetzte Aktuatorregelung ohne spezielle Kenntnis der Hinterradkinematik auskommt und für die Funktionsabarbeitung keine fahrzeugspezifischen Informationen benötigt.

Die RWS Steuergerät 80, 81 nach Figur 2 erfassen der lokalen Sensorgrößen Motorwinkel ϕ_{Mot} und Spurstangenweg X sowie den Motorstrom I_{Mot} des Motors 30, 32 aus dem das Motormoment M_{Mot} ermittelt werden kann und erfassen den für den Lenkungsaktuator betreffenden Spurstangenweg-Sollwertes (X_{RWS,Cmd,RR} für RWS-RR bzw. X_{RWS,Cmd,RL} für RWS-RL), der vom ESP Steuergerät 10 übermittelt wird.

Mittels der RWS Steuergeräte 80, 81 erfolgt eine Regelung des Spurstangenweges der dem jeweiligen RWS Steuergerät zugeordneten Elektromechanik 70 auf der Basis der vom ESP Steuergerät 10 ermittelten und übertragenen Sollwerte sowie des erfassten und den Spurstangenweg repräsentierenden Signals Motorwinkel ϕ_{Mot} oder des direkt gemessenen Spurstangenwegs X.

Die RWS Steuergeräte 80, 81 steuern die Motoren mit der ermittelten Stellgröße (z.B. Motor-Sollmoment) der Spurstangenwegregelung an und überwachen die Eingangssignale und das Aktuatorverhaltens auf Plausibilität und auf ordnungsgemäße Funktionsabarbeitung. Bei Auftreten und onsabarbeitung. Bei Auftreten und Erkennen eines Fehlers erfolgt die Stilllegung des RWS Aktuators durch die RWS Steuergeräte 80, 81.

Die detaillierte Abschaltstrategie wird nun näher betrachtet.

Die Systemstilllegung erfolgt wieder, wie in dem Ausführungsbeispiel 1 in Abstufungen, wobei es zusätzlich davon abhängt, durch welches Steuergerät sie veranlasst wird. Zur vereinfachten Erklärung wird zunächst angenommen, dass das dem linken Lenkungsaktuator (RWS_RL) zugeordnete RWS Steuergerät 80 das Vorliegen eines Fehlers erkannt hat. Gleiches gilt selbstverständlich auch für den umgekehrten Fall, dass das dem rechten Lenkungsaktuator (RWS_RR) zugeordnete RWS Steuergerät 81 das Vorliegen eines Fehlers erkannt hat.

In der ersten Abstufung der Systemstilllegung (Geordnete Systemabschaltung II) hat der Lenkungsaktuator RWS_RL 80 in den ihm zugeordneten Komponenten einen Fehler erkannt, der keinen direkten Einfluss auf die Regelbarkeit und Ansteuerung des RWS_RL Motors hat, z.B. unplausible Eingangsdaten. In diesem Fall fährt der RWS_RL Aktuator auf die vordefinierte Passivposition, wie bspw. die Geradeaus-Stellung des Hinterrades und wird dort geordnet verriegelt. Gleichzeitig wird über den privaten Datenbus 110 das ESP Steuergerät 10 durch eine entsprechende Statusmitteilung, wie Signal "State", 16, 116,216, hierüber informiert. Das ESP Steuergerät veranlasst daraufhin durch ein entsprechendes Steuerkommando, Signal "Cmds", den Aktuator RWS_RR 91 dazu, ebenfalls diese Position anzufahren und den Aktuator nach Erreichen dieser Position ebenfalls geordnet zu verriegeln. Das geordnete Verriegeln beinhaltet hierbei, dass nach dem Erreichen der Zielposition der Aktuator zunächst verriegelt wird und erst dann das Motormoment des Motors 32 langsam bis auf den Wert 0 Nm abgebaut wird.

In der zweiten Abstufung der Systemstilllegung (Sofortige Abschaltung des betroffenen Aktuators) hat das RWS_RL 90 in den ihm zugeordneten Komponenten einen Fehler erkannt, der eine sichere Regelbarkeit und Ansteuerung des RWS_RL Motors 30 nicht mehr gewährleisten kann. In diesem Fall wird der Aktuator sofort abgeschaltet, somit Motor und Verriegelung stromlos geschaltet. Gleichzeitig wird über den privaten Datenbus 110 das ESP Steuergerät 10 durch eine entsprechende Statusmitteilung hierüber informiert. Das ESP Steuergerät veranlasst daraufhin den Aktuator RWS_RR 91 dazu, die für diesen Fall definierte Aktuatorpassivposition anzufahren und den Aktuator nach Erreichen dieser Position geordnet zu verriegeln. Ist das fehlerhafte RWS Steuergerät 80, 81 nicht mehr in der Lage, die entsprechende Statusmittelung zu senden, so kann das ESP Steuergerät 10 die Stilllegung des Steuergerätes anhand des Ausbleibens der zyklisch über den privaten Datenbus 110 versendeten Nachrichten zu erkennen.

In einer dritten Abstufung, der Systemstilllegung durch das ESP Steuergerät 10, hat das ESP Steuergerät 10 bei der Überwachung der RWS Gesamtfunktion 90, 91 einen Fehler oder ein nicht plausibles Systemverhalten bzw. nicht plausible Datensätze festgestellt. Hat dies keinen direkten Einfluss auf die Regelbarkeit des betrachteten Aktuators so werden über ein entsprechendes Steuerkommando beide RWS Aktuatoren zu einer geordneten Abschaltung veranlasst. Nach Erreichen der hierfür vordefinierten Passivposition kann bei Bedarf das ESP Steuergerät 10 beide RWS Steuergeräte über die Schalter 140, 141, 150, 151 abschalten. Ist der erkannte Fehler bzw. die Unplausibilität derart, dass eine sichere Regelbarkeit und/oder Ansteuerung eines der beiden Aktuatoren nicht mehr gewährleistet werden kann, so führt dies zu einer Powerabschaltung des als fehlerhaft festgestellten RWS Steuergerätes durch das ESP Steuergerät 10, welches gleichzeitig den als noch funktionstüchtig identifizierten Aktuator durch ein entsprechendes Steuerkommando dazu veranlasst, die für diesen Fall definierte Aktuatorpassivposition anzufahren und nach Erreichen dieser Position wie oben beschrieben zu verriegeln. Für den Fall, dass diese vordefinierte Passiv-Position von der Position des bereits abgeschalteten Aktuators abhängig ist, steht diese Information trotz abgeschaltetem Steuergerät zur Verfügung, da sie auf dem privaten Datenbus 110 verfügbar ist.

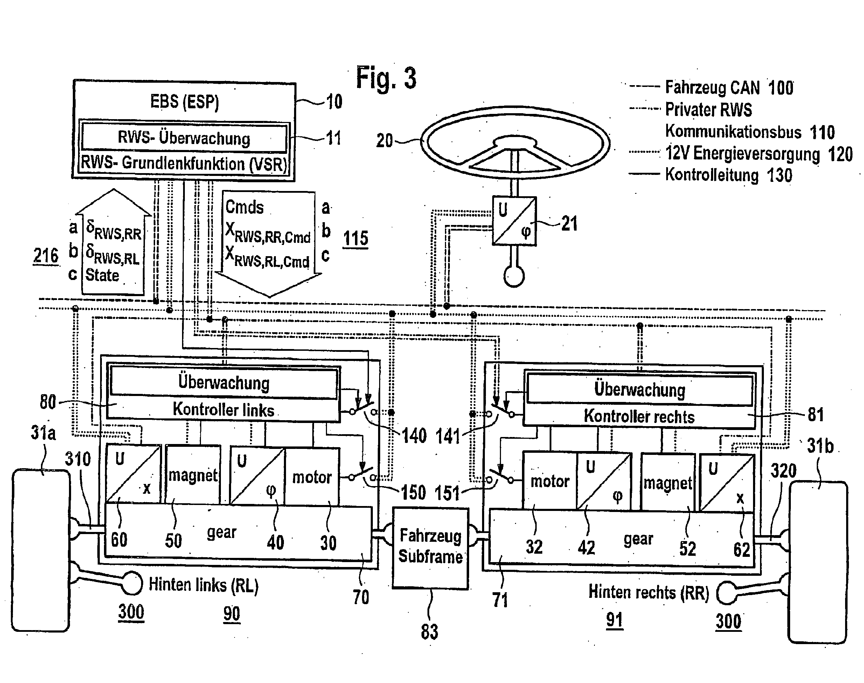

Wie bereits erwähnt, wurde in Fig. 2 als Signalschnittstelle zwischen dem ESP Steuergerät 10 und den beiden RWS Steuergeräten 80, 81 eine Wegschnittstelle betrachtet. Grundsätzlich ist es auch möglich, dass diese Signalschnittstelle durch eine Lenkwinkelschnittstelle realisiert wird. Eine entsprechende Anordnung zeigt Fig 3.

Die Sollwerte für die Aktuatorregelung repräsentieren dann Sollwerte für den einzustellenden Radeinschlagwinkel der Hinterräder (δ_{RWS,Cmd,RR} für RWS_RR bzw. δ_{RWS,Cmd,RL} für RWS_RL). Im Unterschied zu der Beschreibung von Fig. 1 ergibt sich nun, dass im ESP Steuergerät die Berechnung der korrespondierenden Sollwerte für den Spurstangenweg entfallen kann, es sei denn, dass diese Information zu Überwachungszwecke benötigt wird.

In den RWS Steuergeräten 80, 81 findet eine Lenkwinkelregelung statt, wobei zur Ermittlung des Radeinschlagwinkels auf der Basis der den Istlenkwinkel repräsentierenden Signalen Motorwinkel ϕ_{Mot} und/oder Spurstangenweg X die Kenntnis der vorliegenden Achskinematik, die in diesem Fall durch den Zusammenhang zwischen Spurstangenweg und Radlenkwinkel der Hinterräder definiert ist, erforderlich ist. Für die Funktionsabarbeitung werden auf den RWS Steuergeräten daher auch fahrzeugspezifische Informationen benötigt.

Es ist auch angedacht, die drahtgebunden Busverbindungen, insbesondere die private Busverbindung 110 über entsprechend bandbreitige mobile Kommunikationsverbindungen mittels Nahbereichskommunikation, wie Bluetooth, aufzubauen. Hierdurch wird ein Wireless Personal Area Network (WPAN) im Fahrzeug aufgebaut , wobei Entfernungen zwischen 0,2 bis 50 m. überbrückt werden können. Hierzu wir jedem Steuergerät 10, 80, 81 eine zusätzliche Schnittstelle für das Senden und Empfangen der Daten aufgesetzt, wobei diese Schnittstelle derart aufgebaut ist, daß die nachträglich auf ein bestehende Systemarchitektur aufgesetzt wird.

## Patentansprüche

1. System zum Einstellen eines Radeinschlagswinkels eines Hinterrades (31) eines Kraftfahrzeugs, umfassend wenigstens ein Radführungsglied (310, 320), über das ein Radträger des Rades (31) mit einem Fahrzeugaufbau (83) verbunden ist, wobei der Radträger um eine im Wesentlichen parallel zur Radebene verlaufende Drehachse schwenkbar ist und das Radführungsglied (310, 320) beabstandet von der Drehachse an dem Radträger angelenkt ist, wobei das Radführungsglied (310, 320) mittels eines Aktuators in seiner Länge verstellbar ist, wobei mindestens ein Aktuator durch einen Motor (30) und mindestens eine Steuereinheit (10, 80, 81) direkt und/oder indirekt angesteuert wird und die mindestens eine Steuereinheit (10, 80, 81) eine Rechnereinheit mit Speicher sowie mindestens eine drahtgebundene oder mobile Kommunikationsschnittstelle umfasst und mittels der Kommunikationsschnittstelle und mindestens eines Kommunikationsbusses Daten sendet und empfängt, **dadurch gekennzeichnet,**
**dass** das System als eine erste Steuereinheit ein ESP-Steuergerät (10) und als eine zweite und dritte Steuereinheit zwei RWS-Steuergeräte (80, 81) aufweist, wobei die zwei RWS-Steuergeräte (80, 81) durch eine Kreuzschaltung durch Schalter (140, 150, 141, 151) direkt miteinander verbunden sind und die RWS-Steuergeräte (80, 81) eine gegenseitige Überwachung durchführen und bei einem Fehlerfall innerhalb einer RWS-Funktionalität eine gegenseitige Abschaltung durchführen und die RWS-Steuergeräte (80, 81) die Aktuatoren in der Art ansteuern, dass eine abgestufte Systemstilllegung durchgeführt wird.

2. System nach Anspruch 1,
**dadurch gekennzeichnet,**
**dass** die RWS-Steuergeräte (80, 81) modular aufgebaut sind und Mittel zur Erfassung von lokalen Sensorgrößen (30, 32, 40, 42, 50, 52, 60, 62) der Aktuatoren aufweisen.

3. System nach Anspruch 1 oder 2,
**dadurch gekennzeichnet,**
**dass** die abgestufte Systemstilllegung mindestens zweistufig ist.

4. System nach einem der Ansprüche 1 bis 3,
**dadurch gekennzeichnet,**
**dass** ein RWS-Steuergerät (80, 81) den Motorwinkel ϕ_{Mot} den Spurstangenweg X, ein Motormoment M_{Mot}, einen Motorstrom I_{Mot} des Motors (30, 32), eine Fahrzeuggeschwindigkeit V_{vehcle} und einen Fahrerlenkwinkel der Vorderachse δ_{driver} (15 b) erfasst.

5. System nach einem der Ansprüche 1 bis 4,
**dadurch gekennzeichnet,**
**dass** das ESP-Steuergerät (10) einen dem jeweiligen Rad zugeordneten Korrekturlenkwinkel Δδ_{ESP} (15c) erfasst und auswertet.

6. System nach Anspruch 1,
**dadurch gekennzeichnet,**
**dass** das ESP-Steuergerät (10) die RWS-Steuergeräte (80, 81) überwacht und bei Vorliegen eines Fehlerfalls innerhalb einer RWS-Funktionalität mit Hilfe der Schalter (140, 150, 141, 151) die RWS-Steuergeräte (80, 81) abschaltet.

7. Verfahren zum Einstellen eines Radeinschlagswinkels eines Rades eines Kraftfahrzeugs, wobei bei einem Auftreten eines Fehlerfalls in einer Lenkungsaktuatorik (90, 91) eine Erkennung des Fehlerfalls durch RWS-Steuergeräte (80, 81) erfolgt,
**dadurch gekennzeichnet,**
**dass** die RWS-Steuergeräte (80, 81) bei Erkennung eines Fehlerfalls in einer Lenkungsaktuatorik (90, 91) eine abgestufte Systemstilllegung durchführen, wobei die abgestufte Systemstilllegung mindestens zweistufig ist und die RWS-Steuergeräte (80, 81) eine gegenseitige Abschaltung und die Abschaltung der Lenkungsaktuatorik (90, 91) durchführen.

8. Verfahren nach Anspruch 7,
**dadurch gekennzeichnet**
**dass** ein ESP-Steuergerät (10) bei Erkennung eines Fehlerfalls eine abgestufte Systemstilllegung durchführt, wobei die abgestufte Systemstilllegung mindestens zweistufig ist und das ESP-Steuergerät (10) die RWS-Steuergeräte (80, 81) und die Abschaltung der Lenkungsaktuatorik (90, 91) durchführt.

9. Verfahren nach einem der Ansprüche 7 oder 8,
**dadurch gekennzeichnet,**
**dass** die Erkennung eines Fehlerfalls durch eine gegenseitige Überwachung der RWS-Steuergeräte (80,81) oder durch eine Überwachung durch das ESP-Steuergerät (10) erfolgt, wobei die Überwachung durch eine Überprüfung der über einen Datenbus (110) übertragen Daten erfolgt und ein Funktions-Code auf dem überwachenden Steuergerät abgearbeitet wird und mit dem Funktions-Code von dem zu überwachenden Steuergerät verglichen wird.

10. Verfahren nach einem der Ansprüche 7 bis 9,
**dadurch gekennzeichnet,**
die Fahrzeuggeschwindigkeit Vᵥₑₕᵢₑᵢₑ über einen CAN-Bus (100) von den Steuergeräten (10, 80, 81) eingelesen wird.

## Claims

1. System for adjusting a wheel lock angle of a rear wheel (31) of a motor vehicle, comprising at least one wheel guide member (310, 320), by means of which a wheel carrier of the wheel (31) is connected to a vehicle body (83), wherein the wheel carrier can pivot about a rotational axis which runs essentially parallel to the plane of the wheel, and the wheel guide member (310, 320) is coupled to the wheel carrier at a distance from the rotational axis, wherein the length of the wheel guide member (310, 320) can be adjusted by means of an actuator, wherein at least one actuator is driven by a motor (30) and at least one control unit (10, 80, 81) is driven directly and/or indirectly, and the at least one control unit (10, 80, 81) comprises a computer unit with a memory and at least one wire-bound or mobile communication interface, and transmits and receives data by means of the communication interface and at least one communication bus **characterized in that** the system has an ESP control device (10) as a first control unit and two RWS control devices (80, 81) as a second and third control unit, wherein the two RWS control devices (80, 81) are connected directly to one another by crosscoupling by means of switches (140, 150, 141, 151), and the RWS control devices (80, 81) in the event of a fault within an RWS functionality the RWS control devices (80, 81) monitor one another switch one another off, and the RWS control devices (80, 81) drive the actuators in such a way that stepped deactivation of the system is carried out.

2. System according to Claim 1,
**characterized**
**in that** the RWS control devices (80, 81) are of modular design and have means for acquiring local sensor variables (30, 32, 40, 42, 50, 52, 60, 62) of the actuators.

3. System according to Claim 1 or 2,
**characterized**
**in that** the stepped deactivation of the system has at least two steps.

4. System according to one of Claims 1 to 3,
**characterized**
**in that** an RWS control unit (80, 81) acquires the motor angle ϕ_{Mot}, the track rod displacement X, a motor torque M_{Mot} , a motor current I_{Mot} of the motor (30, 32), a vehicle velocity V_{Vehicle}, and a driver steering angle of the front axle δ_{driver} (15b).

5. System according to one of Claims 1 to 4,
**characterized**
**in that** the ESP control device (10) acquires and evaluates a correction steering angle Δδ_{ESP} (15c) which is assigned to the respective wheel.

6. System according to Claim 1,
**characterized**
**in that** the ESP control device (10) monitors the RWS control devices (80, 81) and in the event of a fault within an RWS functionality said ESP control device (10) switches off the RWS control devices (80, 81) by means of the switches (140, 150, 141, 151).

7. Method for adjusting a wheel lock angle of a wheel of a motor vehicle, wherein if a fault occurs in a steering actuation system (90, 91), the fault is detected by means of the RWS control devices (80, 81),
**characterized**
**in that** if a fault is detected in a steering actuation system (90, 91), the RWS control devices (80, 81) carry out stepped deactivation of the system, wherein the stepped deactivation of the system has at least two steps and the RWS control devices (80, 81) switch one another off and switch off the steering actuation system (90, 91).

8. Method according to Claim 7,
**characterized**
**in that** when a fault is detected, the ESP control device (10) carries out stepped deactivation of the system, wherein the stepped deactivation of the system has at least two steps, and the ESP control device (10) switches off the RWS control devices (80, 81) and switches off the steering actuation system (90, 91).

9. Method according to one of Claims 7 or 8,
**characterized**
**in that** a fault is detected by the RWS control devices (80, 81) monitoring one another or by monitoring by the ESP control device, wherein the monitoring is carried out by checking the data transmitted via a databus 110, and a function code is processed on the monitoring control device and is compared with the function code of the control device which is to be monitored.

10. Method according to one of Claims 7 to 9,
**characterized**
**in that** the vehicle velocity V_{vehicle} is read in by the control devices (10, 80, 81) via the CAN bus (100).

## Revendications

1. Système de réglage d'un angle de butée de roue d'une roue arrière (31) d'un véhicule automobile, comprenant au moins un élément de guidage de roue (310, 320) par le biais duquel un support de roue de la roue (31) est relié avec une carrosserie de véhicule (83), le support de roue pouvant pivoter autour d'un axe de rotation qui s'étend pour l'essentiel parallèlement au plan de la roue et l'élément de guidage de roue (310, 320) étant articulé au support de roue en étant espacé de l'axe de rotation, la longueur de l'élément de guidage de roue (310, 320) étant réglable au moyen d'un actionneur, au moins un actionneur étant commandé directement et/ou indirectement par un moteur (30) et au moins une unité de commande (10, 80, 81) et l'au moins une unité de commande (10, 80, 81) comprenant une unité de calcul avec mémoire et au moins une interface de communication filaire ou mobile et émettant et recevant des données au moyen de l'interface de communication et d'au moins un bus de communication, **caractérisé en ce que** le système présente comme première unité de commande un module de commande ESP (10) et comme deuxième et troisième unités de commande deux modules de commande RWS (80, 81), les deux modules de commande RWS (80, 81) étant reliés directement l'un à l'autre par un circuit croisé par des commutateurs (140, 150, 141, 151) et les modules de commande RWS (80, 81) effectuant une surveillance mutuelle et en présence d'une situation de défaut au sein d'une fonctionnalité RWS, effectuant une mise hors circuit et les modules de commande RWS (80, 81) commandant les actionneurs de manière à réaliser une immobilisation graduelle du système.

2. Système selon la revendication 1, **caractérisé en ce que** les modules de commande RWS (80, 81) sont de construction modulaire et présentent des moyens pour détecter des grandeurs de capteur locales (30, 32, 40, 42, 50, 52, 60, 62) des actionneurs.

3. Système selon la revendication 1 ou 2, **caractérisé en ce que** l'immobilisation graduelle du système est au moins en deux étapes.

4. Système selon l'une des revendications 1 à 3, **caractérisé en ce qu'**un module de commande RWS (80, 81) détecte l'angle du moteur ϕ_{Mot}, la course de la barre d'accouplement X, un couple du moteur M_{Mot}, un courant de moteur I_{Mot} du moteur (30, 32), une vitesse du véhicule V_{Vehicle} et un angle de direction du conducteur de l'essieu avant δ_{driver} (15b).

5. Système selon l'une des revendications 1 à 4, **caractérisé en ce que** le module de commande ESP (10) détecte et interprète un angle de direction de correction Δδ_{ESP} (15c) associé à la roue correspondante.

6. Système selon la revendication 1, **caractérisé en ce que** le module de commande ESP (10) surveille les modules de commande RWS (80, 81) et, en présence d'une situation de défaut au sein d'une fonctionnalité RWS, met les modules de commande RWS (80, 81) hors circuit à l'aide des commutateurs (140, 150, 141, 151).

7. Procédé de réglage d'un angle de butée de roue d'une roue d'un véhicule automobile, selon lequel, lorsqu'un défaut se produit dans un mécanisme d'actionnement de la direction (90, 91), le défaut est détecté par des modules de commande RWS (80, 81), **caractérisé en ce que** les modules de commande RWS (80, 81), en cas de détection d'un défaut dans un mécanisme d'actionnement de la direction (90, 91), réalisent une immobilisation graduelle du système, l'immobilisation graduelle du système s'effectuant au moins en deux étapes et les modules de commande RWS (80, 81) effectuant une mise hors circuit mutuelle ainsi que la mise hors circuit du mécanisme d'actionnement de la direction (90, 91).

8. Procédé selon la revendication 7, **caractérisé en ce qu'**un module de commande ESP (10), lors de la détection d'un défaut, réalise une immobilisation graduelle du système, l'immobilisation graduelle du système s'effectuant au moins en deux étapes et le module de commande ESP (10) surveillant les modules de commande RWS (80, 81) et effectuant la mise hors circuit du mécanisme d'actionnement de la direction (90, 91).

9. Procédé selon l'une des revendications 7 ou 8, **caractérisé en ce que** la détection d'un défaut s'effectue par une surveillance mutuelle des modules de commande RWS (80, 81) ou par la surveillance par le module de commande ESP (10), la surveillance s'effectuant par un contrôle des données transmises par le biais d'un bus de données (110) et un code de fonction étant traité sur le module de commande à surveiller et comparé avec le code de fonction du module de commande à surveiller.

10. Procédé selon l'une des revendications 7 à 9, **caractérisé en ce que** la vitesse du véhicule V_{Vehicle} est lue par les modules de commande (10, 80, 81) par le biais d'un bus CAN (100).
